Europäisches Patentamt

European Patent Office

Office européen des brevets

(11) Publication number: **0 326 105**
**A1**

## (12) EUROPEAN PATENT APPLICATION

(21) Application number: **89101273.4**

(22) Date of filing: **25.01.89**

(51) Int. Cl.⁴: **A47J 27/05 , A47J 36/20**

(30) Priority: **25.01.88 ZA 880485**
**08.03.88 ZA 881637**
**15.07.88 ZA 885119**

(43) Date of publication of application:
**02.08.89 Bulletin 89/31**

(84) Designated Contracting States:
**AT BE CH DE ES FR GB GR IT LI LU NL SE**

(71) Applicant: **Henderson, Henning Morgan**
**2 Club View Corner Nigel & Hills Roads**
**Selection Park**
**Springs Transvaal Province(ZA)**

(72) Inventor: **Henderson, Henning Morgan**
**2 Club View Corner Nigel & Hills Roads**
**Selection Park**
**Springs Transvaal Province(ZA)**

(74) Representative: **Patentanwälte Beetz sen. -**
**Beetz jun. Timpe - Siegfried -**
**Schmitt-Fumian- Mayr**
**Steinsdorfstrasse 10**
**D-8000 München 22(DE)**

(54) **Cooking apparatus for steam cooking food.**

(57) Cooking apparatus for cooking foodstuffs by steaming same is provided. The cooking apparatus comprises a tubular body (6,22,28) adapted to receive in its lower end region (23) a lower perforated food support (8,26,29), preferably a wire basket (8,26) or simple perforated plate (29), and having formations (7,24) for supporting a second and vertically spaced upper perforated food support (11,25,29) also preferably in the form of a wire basket (11,25) or perforated plate (29). The apparatus preferably includes a perforated base (2,27,31) for support on a cooking pot (1), a lid (13,20,32) which may optionally be perforated, and one or more dividers (30) having perforations therethrough.

FIG. 2

## COOKING APPARATUS FOR STEAM COOKING FOOD

### FIELD OF THE INVENTION

THIS INVENTION relates to cooking apparatus for steam cooking food and, more particularly, to apparatus which is particularly suitable for enabling different foodstuffs to be steamed simultaneously using the same source of steam, generally a cooking pot.

### BACKGROUND TO THE INVENTION

Where different foods have to be cooked simultaneously and, in particular, where they are to be cooked by steaming, it may be that inadequate cooking plates or the like are available or, in any event, that it is of interest to conserve energy.

It is the object of this invention to provide cooking apparatus particularly adapted for steam cooking foods of different types simultaneously using the same source of steam.

### SUMMARY OF THE INVENTION

In accordance with this invention there is provided cooking apparatus comprising an operatively, substantially vertical tubular body adapted to accommodate a first perforated food support in a lower region thereof and having formations for supporting a vertically spaced second perforated food support directly above the first, in use.

Further features of the invention provide for the tubular body to optionally be made in two separate releasably engageable parts; for the, or each part of the, tubular body to be provided with external handles, conveniently of a heat resistant nature, whereby the body or part can be manipulated; for the apparatus to include a base adapted to be supported on the upper periphery of a cooking pot and having perforations therethrough for steam to pass through the base and into said tubular body; and for the apparatus to be provided with a lid adapted to be supported on the upper end of the tubular body and preferably provided with a manipulating handle and optionally perforations therethrough.

Still further features of this invention provide for the base to be dished and for the perforations to be provided around the central part. This will enable the apparatus to be used with pots of different sizes.

A still further, and important feature of the invention provides for the apparatus to include a removable divider having one or more walls for location on a food support wherein each wall of the divider is provided with a multitude of perforations therethrough. It has been found that perforated divider walls contribute to very even cooking due to better steam circulation in use.

The lid may be a perforated lid or may be a standard imperforate lid operatively supported on the top of the tubular body. In the latter case the upper periphery of the body adjacent the rim on which the pot lid will rest in use may have vent holes for steam to escape from the body or the uppermost peripheral edge of the tubular body may be riffled or corrugated to define, with the periphery of the lid, vent holes for the escape of steam in use.

However, perforations or vent holes are not a necessity at all and the body and lid may be formed in the manner of a conventional pot lid where no such outlets for steam are provided. Indeed, the imperforate, vent hole free arrangement, it is envisaged, will be the most economical arrangement.

The perforated food supports are conveniently a metal mesh, in particular a fine welded metal mesh and the food supports could be a simple flat support or, alternatively, could form the base of a basket having mesh sidewalls. In the latter case, the baskets preferably having folding handles and, in the case of a lower, and generally both food supports, they are provided with feet for supporting them in a somewhat elevated position for a support therefor in particular the base of the cooking apparatus. Alternatively, the food supports could be simple perforated metal plates.

The above and other features will be more fully understood from the following description of three different embodiments of the invention.

### BRIEF DESCRIPTION OF THE DRAWINGS

In the drawings:-

FIG. 1 is a schematic sectional elevation of cooking apparatus according to this invention in the operative position;

FIG. 2 is an exploded view of the various components of the apparatus in a form wherein the body is divided into two separate sections, the upper one of which is suitable for use with an imperforate standard type of lid; and,

FIG. 3 is an exploded, partly sectioned, isometric view of a third embodiment of the invention.

## DETAILED DESCRIPTION WITH REFERENCE TO THE DRAWINGS

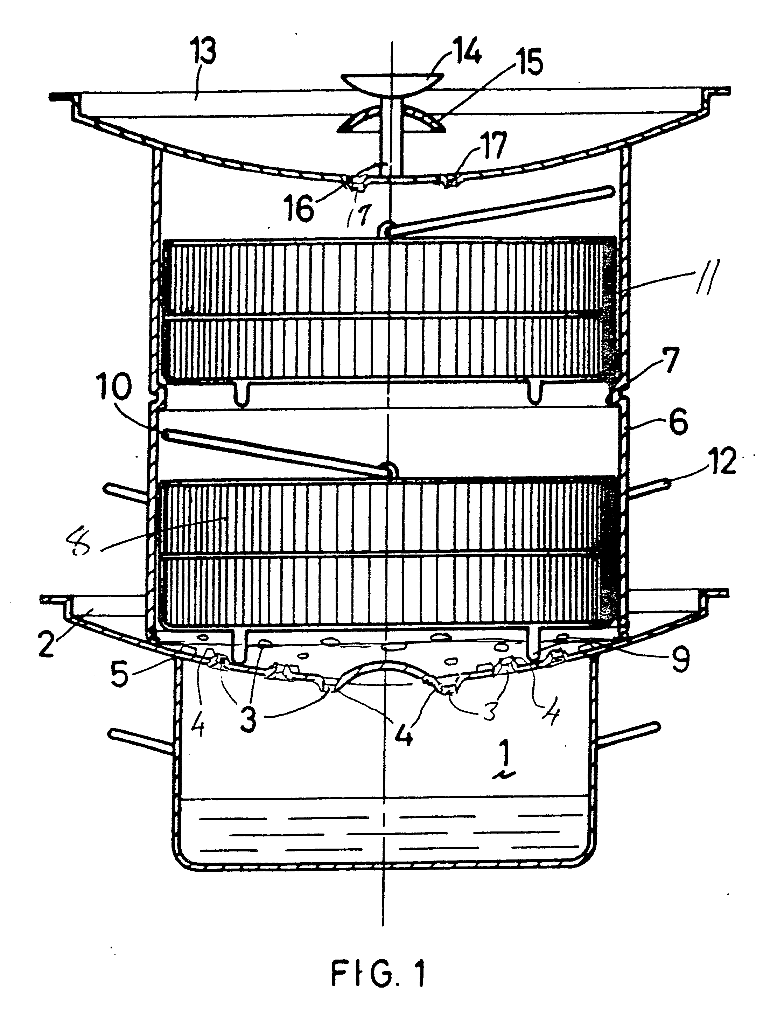

In the embodiment of the invention illustrated in Fig. 1 of the drawings, cooking apparatus according to the invention is adapted to be employed in conjunction with a conventional cooking pot 1. The apparatus comprises a base 2 in the form of a smooth, arcuately dished, member having perforations 3 therethrough, the perforations preferably being defined at the ends of short truncated conical formations 4.

The short truncated conical formations 4, in the operatively lowermost zone of the base 2 are directed downwardly whilst the remaining formations are directed upwardly and are located over the remainder of the area of the base 2. The purpose of this is to prevent liquids present on the base from running out of any holes other than those in the lowermost zone which is the central zone. Accordingly, if perforated zones of the base project over the periphery 5 of the supporting pot, liquids will not drip out of the holes but will run to said lowermost holes and back into the pot. Alternatively, the holes may be located around the central part of the base 2 only. The base could, in fact, be the operatively lower shell member of a two part perforated lid assembly. The base supports, in the operative condition, a circular cross-sectioned tubular body 6, open at both ends, and having a central peripheral inwardly directed flange 7 approximately midway up its height. This flange can simply be formed by deforming a suitable material from which the tubular body is made.

The tubular body is made to accommodate, in its lower region, a food support 8 in the form of a mesh basket dimensioned to fit within the tubular body and having feet 9 whereby it can be supported on the base directly. Also the food support basket has a hinged handle 10 adapted to be folded downwardly onto the edge of the basket when not required for use.

An identical basket 11 is operatively loosely supported on the flange 7 in the tubular body so that it is vertically above the first mentioned and lower food support basket 8 as illustrated.

The tubular body 6 is provided with a pair of diametrically opposite heat resistant handles 12 whereby it can be manipulated when hot during use.

Finally, the apparatus includes a lid for the upper end of the tubular body. The lid may be imperforate and of a standard cooking pot lid configuration as indicated above. However, in this embodiment of the invention the lid 13 is perforated and provided with a centrally located manipulating handle 14. This handle 14 preferably has a shield 15 around the stem 16 below the handle to prevent steam escaping through the perforations 17 from scalding the user of the apparatus. Such lid could be defined by the operatively upper shell member of a two part perforated cover assembly as mentioned above. The lid illustrated in Fig. 1 is, however, different and has a downwardly dished configuration with its perforations 17 in the central region thereof which allows liquids settling on the lid to drain downwardly therethrough as well as allowing the escape of steam.

In use, the above described apparatus is located over a pot (as illustrated in Fig. 1) and different forms of foodstuffs can be introduced into the two food support baskets.

Dividers (not shown in Fig. 1) in the form of walls of either solid, perforated, or mesh material, can be provided to be removably fitted into the baskets as may be required. These dividers will preferably extend radially from the centre to divide the baskets into separate compartments for different foods.

Indeed a whole cooking procedure can be employed whereby different foodstuffs requiring different cooking times are introduced at different stages to the two baskets and the pot itself could even be used for boiling a product such as rice simultaneously in the pot. Clearly, the upper basket can be manipulated, during use, with the aid of the hinged handle and the tubular body can be removed from its position surrounding the lower basket in order to provide access to the latter.

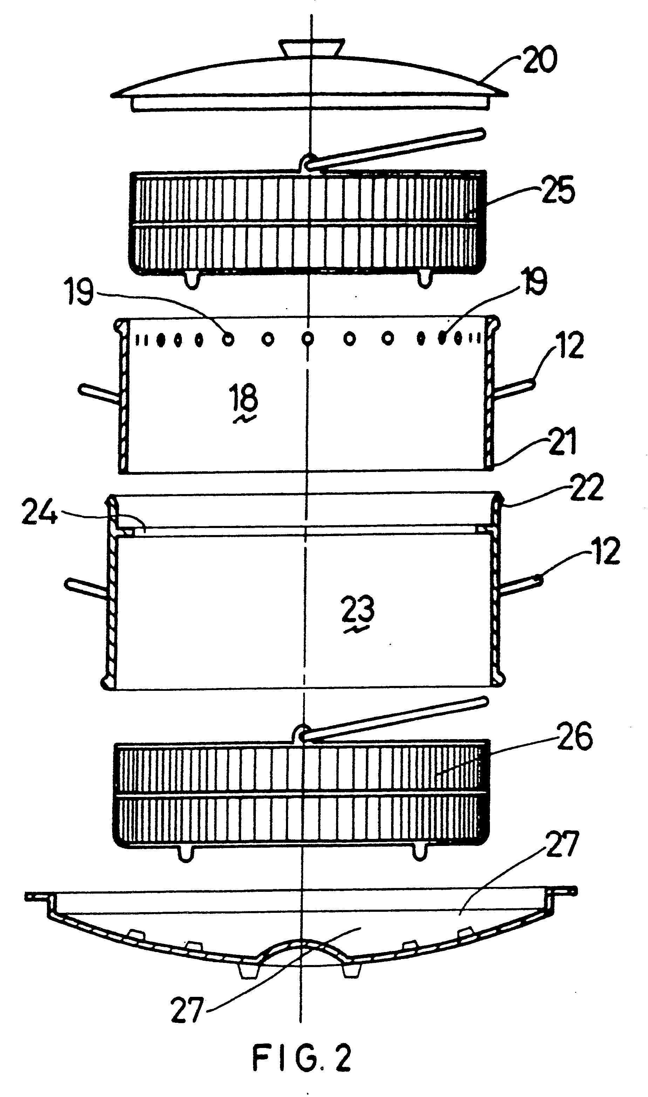

The embodiment of the invention illustrated in Fig. 2 differs from that in Fig. 1 in that the tubular body is made in two separable parts. The upper part 18 may have a series of vent holes 19 through the wall thereof adjacent its upper rim. This enables an imperforate standard pot type of lid 20 to be used in place of the perforated lid 13 whilst still providing vent holes for the escape of steam. As indicated above, however, no vent holes need to be provided at all.

The lower edge 21 of this upper part 18 is dimensioned to fit into the upper end 22 of the lower part 23 and to be supported on a inwardly directed flange 24 which also carries the upper food support basket 25 in use. The lower food support basket 26 is operatively supported on the base 27 in the manner described above.

Further it will be appreciated that with this assembly the lower part of the body and one basket can be removed and only the upper part used if the quantity of food being cooked can be so accommodated.

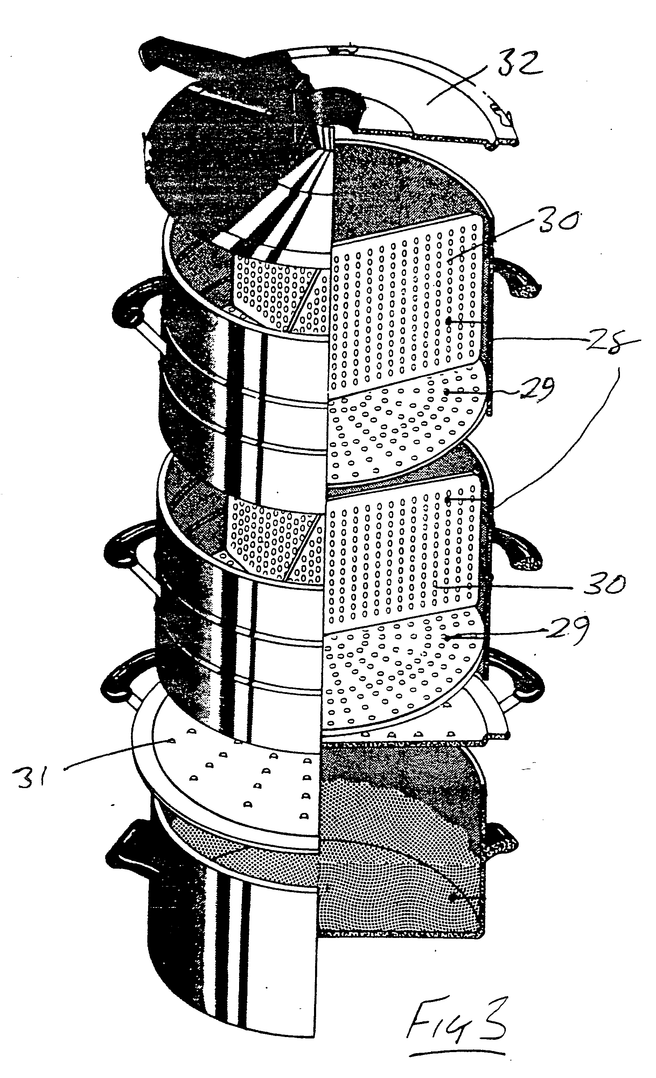

Turning now to the embodiment illustrated in Fig. 3, there is provided a two part body 28 wherein each part is adapted to support its own food support which in this case is a simple perforated plate 29. Each plate 29 has for use in combination therewith a three wall divider 30 wherein each wall has a multitude of perforations therethrough. In this case the base 31 and lid 32 are indeed the two parts of a two part perforated cover assembly. In use this embodiment is used as described above.

It is envisaged that cooking apparatus as described above will be highly useful, in particular to persons wishing to conserve energy during cooking operations or, where only one cooking facility is available.

## Claims

1. Cooking apparatus comprising an operatively substantially vertical tubular body (6,22,28) adapted to accommodate a first perforated food support (8,26,29) in a lower region (23) thereof and having formations (7,24) for supporting a vertically spaced second perforated food support (11,25,29) directly above the first, in use.

2. Cooking apparatus as claimed in claim 1 in which the tubular body is made in two separate, releasably engageable, parts (18,23), namely an operatively upper (18) and an operatively lower part (23).

3. Cooking apparatus as claimed in claim 2 in which said formations (24) serve to support the lower end (21) of the operatively upper part (18) as well as the operatively upper perforated food support.

4. Cooking apparatus as claimed in any one of the preceding claims in which the tubular body or each part thereof is provided with external manipulating handles (12).

5. Cooking apparatus as claimed in any one of the preceding claims in which the perforated food supports are in the form of baskets (8,11,25,26).

6. Cooking apparatus as claimed in claim 5 in which at least one of the perforated food supports is provided with feet (9) for supporting same in a somewhat elevated position off a support surface.

7. Cooking apparatus as claimed in any one of claims 1 to 4 in which the perforated food supports are in the form of removable perforated plates (29).

8. Cooking apparatus as claimed in any one of the preceding claims which includes a perforated base (2,27,31) adapted to be supported on the upper edge of a cooking pot and to support thereon the lower edge of the tubular body.

9. Cooking apparatus as claimed in claim 8 in which the base is downwardly dished towards a central zone which is provided with perforations (3).

10. Cooking apparatus as claimed in claim 9 in which perforations (3) in outer regions of the base are formed at the operatively upper ends of upwardly extending short truncated conical formations (4) and the perforations (3) towards the central zone are located at the lower ends of downwardly extending short truncated conical formations (4).

11. Cooking apparatus as claimed in any one of the preceding claims which includes a lid (13,20,32) for co-operation with the operatively upper end of the tubular body.

12. Cooking apparatus as claimed in claim 11 in which the lid (20) is imperforate.

13. Cooking apparatus as claimed in claim 11 in which the lid (13,32) is perforated.

14. Cooking apparatus as claimed in any one of the preceding claims in which the tubular body has either a series of perforations (19) through its sidewall in an upper region thereof or is riffled or serrated at its upper edge to define, with a lid, vent holes.

15. Cooking apparatus as claimed in any one of the preceding claims in which there is included at least one divider (30) having walls which have a multitude of perforations therethrough.

FIG. 1

FIG. 2

FIG 3

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4 ) |
|---|---|---|---|
| X | FR-A-1173720 (SCHRAENEN)<br>* the whole document * | 1, 2, 4, 5, 7, 11-14 | A47J27/05<br>A47J36/20 |
| X | CH-A-358212 (FRITSCH & CO)<br>* page 2, line 29 - page 3, line 29; figures 1-4 * | 1, 2, 4, 7, 11, 13 | |
| Y | | 5, 6, 8, 9, 15 | |
| Y | GB-A-433895 (STEWART)<br>* the whole document * | 5, 6 | |
| Y | CH-A-219099 (BAUMANN)<br>* the whole document * | 8 | |
| Y | CH-A-171298 (KEIDEL-MEIER)<br>* the whole document * | 9 | |
| Y | FR-A-1472254 (BOUYEURE ET AL)<br>* the whole document * | 15 | TECHNICAL FIELDS SEARCHED (Int. Cl.4 ) |
| A | GB-A-314623 (BARTON)<br>* the whole document * | 1, 2, 10 | A47J |

The present search report has been drawn up for all claims

| Place of search | Date of completion of the search | Examiner |
|---|---|---|
| THE HAGUE | 11 APRIL 1989 | ·MEINDERS H. |

EPO FORM 1503 03.82 (P0401)